# EUROPEAN PATENT APPLICATION

(11) **EP 2 833 302 A1**
(43) Date of publication of application: **04.02.2015**
(21) Application number: 14175257.6
(22) Date of filing: 01.07.2014
(51) Int. Cl.: G06Q 10/02, B64F 1/36

(54) **Self-service system and method of tagging baggage**

(30) Priority: 30.07.2013 US 201313954433
(71) Applicant: NCR Corporation, Duluth, GA 30096 (US)
(72) Inventor: Harlalka, Mitesh, Lake Mary, FL Florida 32746 (US); Sutton, Robert, Cumming, GA Georgia 30041 (US)
(74) Representative: MacLeod, Roderick William

(57) **Abstract**

A self-service system and method of tagging baggage which reduces passenger wait time. An example method includes establishing an on-line session to facilitate check-in of a passenger (step 82), receiving passenger identifying information during the on-line session (step 86), receiving passenger baggage information during the on-line session (step 92), receiving, during the on-line session, an image of a baggage tag (step 96), and printing the image of the baggage tag for attachment by the passenger to baggage of the passenger.

## Description

The present invention relates to travel systems, and more specifically to a self-service system and method of tagging baggage.

Baggage tags, also known as bag tags, are used by transportation companies to route passenger baggage to a final destination. Most baggage tags are made of adhesive paper stock. Thermal printers are typically used to print information on the baggage tags. Some transportation companies may also or alternatively use radio frequency identification (RFID) tags containing the information.

Passengers with baggage must often stand in lines at checkout counters where an attendant must print and/or prepare a baggage tag and attach the baggage tag to the traveler's baggage.

Therefore, it would be desirable to provide a self-service method of tagging baggage that would allow a traveler to generate and attach a baggage tag to baggage.

In accordance with the teachings of the present invention, a self-service system and method of tagging baggage is provided.

An example method includes establishing an on-line session to facilitate check-in of a passenger, providing passenger identifying information during the on-line session, providing passenger baggage information during the on-line session, receiving, during the on-line session, an image of a baggage tag, and printing the image of the baggage tag for attachment by the passenger to baggage of the passenger.

The example method may further envision restrictions on self-tagging of baggage based upon location and/or jurisdiction, such as receiving the image of the baggage tag only when the passenger has pre-registered for the printing and the attachment, receiving the image of the baggage tag only when the printing and the attachment have been authorized for a route of the passenger, providing the passenger identifying information to a baggage drop computer system before the attachment of the baggage tag to the baggage, and/or other restrictions.

According to a first aspect of the present invention there is provided a processor-implemented method programmed in a non-transitory processor-readable medium and to execute on one or more processors of a server configured to execute the method, comprising: interacting, at the server, with a passenger to receive and verify passenger identifying information; receiving baggage information from the passenger; and sending an image of a baggage tag to the passenger for printing and attachment by the passenger to baggage of the passenger.

Interacting with a passenger optionally comprises: establishing a virtual session between the passenger and an agent to verify the passenger identifying information.

Interacting with a passenger optionally comprises: interacting with a passenger through a kiosk.

Interacting with a passenger optionally comprises: interacting with a passenger through a home computer system.

Interacting with a passenger optionally comprises: interacting with a passenger through a mobile communication device.

The method optionally further comprises: determining that the passenger has pre-registered for the printing and the attachment before sending the image of the baggage tag to the passenger.

The method optionally further comprises: determining that the printing and the attachment have been authorized for a route of the passenger before sending the image of the baggage tag to the passenger.

The method optionally further comprises: interacting, at the server, with a passenger through a baggage drop computer system to receive and verify the passenger identifying information before the attachment of the baggage tag to the baggage.

According to a second aspect of the present invention there is provided a baggage drop computer system comprising: network circuitry for connecting to an airline system through a network, a display, a baggage tag printer, a travel document reader, and baggage handling software operable to: (i) instruct a passenger to use the barcode reader to scan a barcode from a boarding pass; (ii) connect to the airline system to identify the passenger using information in the scanned barcode; (iii) ascertain from the airline system that the passenger has previously checked baggage; (iv) prompt the passenger to put the baggage on the conveyor; and (v) capture baggage weight information and compare it to threshold limits and/or make it available for airline weight and balance calculations.

The travel document reader may comprise a two-dimensional barcode reader.

The travel document reader may comprise a portable, hand-held device.

The travel document reader may comprise an RFID reader/writer for programming RFID baggage tags.

The baggage drop computer system optionally further comprises a conveyor incorporating a scale for weighing passenger baggage, and operable to transport baggage to a baggage handling system.

The conveyor optionally includes baggage size constraints and/or baggage size measuring equipment.

The baggage drop computer system optionally further comprises a passport reader/scanner.

The baggage drop computer system optionally further comprises a biometric capture device for identifying a passenger.

The baggage handling software optionally: (i) instructs a passenger to use the barcode reader to scan a baggage tag; (ii) ascertains whether the scanned baggage tag information matches previously stored baggage tag information; (iii) activates the baggage tag; and (iv) inducts the activated baggage tag into a baggage handling system.

According to a third aspect of the present invention there is provided a processor-implemented method programmed in a non-transitory processor-readable medium and to execute on one or more processors configured to execute the method, comprising: establishing an on-line session to facilitate check-in of a passenger; providing passenger identifying information during the on-line session; providing passenger baggage information during the on-line session; receiving, during the on-line session, an image of a baggage tag; and printing the image of the baggage tag for attachment by the passenger to baggage of the passenger.

Interacting optionally comprises: establishing a virtual session between the passenger and an agent to verify the passenger identifying information.

Establishing optionally comprises: establishing the on-line session by a kiosk.

Interacting optionally comprises: establishing the on-line session by a home computer system or by a mobile communication device.

Receiving optionally comprises: receiving the image of the baggage tag only when the passenger has pre-registered for the printing and the attachment.

The method optionally further comprises: receiving the image of the baggage tag only when the printing and the attachment have been authorized for a route of the passenger.

The method optionally further comprises: providing the passenger identifying information to a baggage drop computer system before the attachment of the baggage tag to the baggage.

Fig. 1 is a block diagram of an example travel system.

Fig. 2 is an example baggage drop computer system.

Fig. 3 is a flow diagram illustrating an example self check-in method.

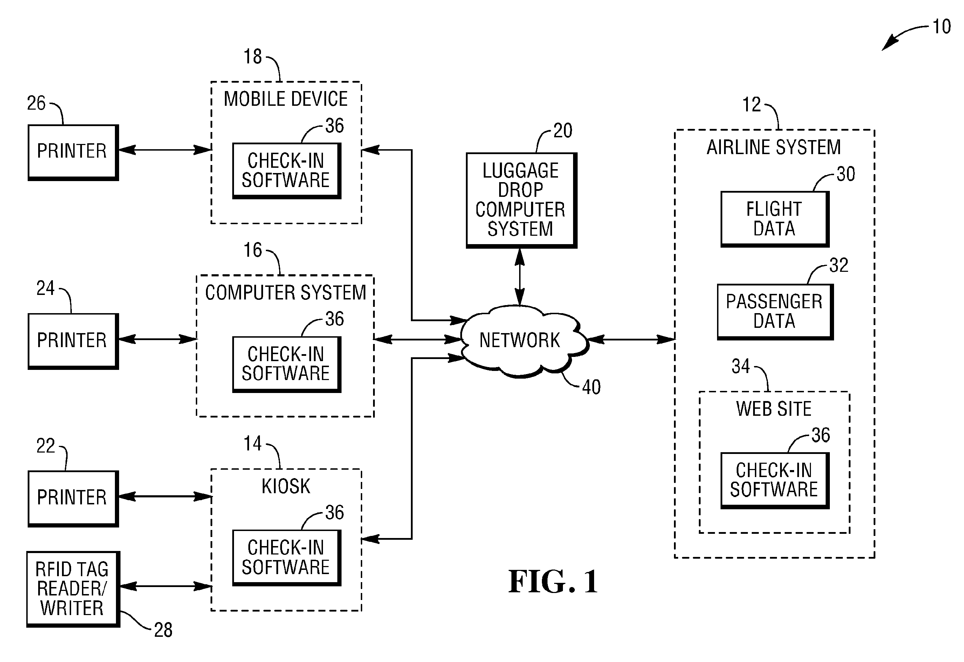

Turning now to Fig. 1, travel system 10 is illustrated in an air travel example. Other types of transportation methods and corresponding types of travel systems are also envisioned.

Example travel system 10 primarily includes one or more airline systems 12. Airline system 12 includes one or more servers including one or more processors, memory, and program and data storage. Airline system 12 may execute an operating system such as a Microsoft or Linux operating system. Airline system 12 further includes network circuitry for connecting to network 40, and may include other circuitry for connecting to peripherals, such as a display, a printer, a mouse, and a keyboard.

Network 40 may include any combination of wireless or wired networks, including local area, wide area, virtual private, and global communication networks, such as the Internet.

Airline system 12 maintains one or more databases containing flight data 30 and passenger data 32. Flight data 30 may include information about each scheduled flight, including whether a passenger with a reservation for the flight may self-tag baggage. Passenger data 32 may include passenger identification information and other information associated with the passenger identification information, such as baggage information, whether the passenger is authorized to self-tag baggage, and whether the passenger has checked-in. Airline system 12 may also include third part host computers that store and manage some of the flight data 30 and passenger data 32 in a Departure Control System (DCS) for an airline.

Airline system 12 may be connected to the World Wide Web (WWW or "web") and include a web server which hosts a web site 34 including web pages, web applications and other web content. Passengers may visit web site 34 to make or change reservations and to check-in for flights. For check-in, web site 34 may include or provide check-in software 36.

In one example, check-in software 36 may be written in a programming language such as the Java programming and be hosted within browser software.

As another example, check-in software 36 may include a script, written in a scripting language such as JavaScript, combined with hypertext markup language (HTML) or other suitable web page language and hosted within browser software.

As yet another example, check-in software 36 may include a software applet written to be executed within an operating system of a host computer system.

In one example check-in method, passengers use kiosk 14, which may be located at an airport or offsite from the airport, such as at a hotel. Kiosk 14 connects to airline system 12 through network 40 for downloading web pages and check-in software 36 from web site 34.

Kiosk 14 includes one or more processors, memory, and program and data storage. Kiosk 14 may execute an operating system such as a Microsoft operating system. Kiosk 14 may execute other computer software, which may be stored in a computer readable medium, and which include web browser software to display web pages from airline system 12.

Kiosk 14 further includes network circuitry for connecting to airline system 12 through network 40, and may include other circuitry for connecting to peripherals, such as a display, a printer 22, a radio frequency identification (RFID) reader/writer 28, a camera, a microphone, a speaker, a reader for reading travel documents (i.e. boarding passes, passports, machine readable visas or other government issued documents), a mouse, and an input device or keyboard. For example, kiosk 14 may communicate with printer 22, the travel document reader, and RFID reader/writer 28 using Universal Serial Bus (USB) standard circuitry. Printer 22 may include a thermal printer with a supply of adhesive paper stock for printing standard baggage tags. The adhesive paper stock may include embedded RFID tags for programming by RFID reader/writer 28 during check-in. The display and the input device may be combined as a touch screen.

In another example check-in method, passengers use computer system 16, which would typically be remote from an airport, but could be anywhere there is an available printer 24. For example, computer system 16 may be located at a passenger's home, at a hotel where the passenger is staying, or other location where printer 24 is available for use. Computer system 16 may include a personal computer or laptop computer. Computer system 16 connects to airline system 12 through network 40 for downloading web pages and check-in software 36 from web site 34.

Computer system 16 includes one or more processors, memory, and program and data storage. Computer system 16 may execute an operating system such as a Microsoft operating system. Computer system 16 may execute other computer software, which may be stored in a computer readable medium, and which include web browser software to display web pages from airline system 12. Computer system 16 further includes network circuitry for connecting to airline system 12 through network 40, and may include other circuitry for connecting to peripherals, such as a display, a printer 24, a camera, a microphone, a speaker, a mouse, and an input device or keyboard. For example, computer system 16 may communicate with printer 24, using Universal Serial Bus (USB) standard circuitry. It is envisioned that in some remote environments, such as hotels, a travel document reader and/or an RFID reader/writer and RFID tags may be available. When a travel document reader and/or an RFID reader/writer is available, computer system 16 may couple to the travel document reader and/or RFID reader/writer through USB or other communication circuitry.

In another example check-in method, passengers use mobile communication device 18 to check-in. Mobile communication device 18 may include a smart phone, personal digital assistant, or other portable communication device. Mobile communication device 18 connects from anywhere to airline system 12 through network 40 for downloading web pages and check-in software 36 from web site 34, though it is envisioned that passengers would typically check-in where there is an available printer 26.

Mobile communication device 18 includes one or more processors, memory, and program and data storage. Mobile communication device 18 may execute an operating system such as a Microsoft, Apple, Google, or other operating system. Mobile communication device 18 may execute other computer software, which may be stored in a computer readable medium, and which include web browser software to display web pages from airline system 12. Mobile communication device 18 further includes network circuitry for connecting to airline system 12 through network 40, and may include other circuitry for connecting to peripherals, such as a display, a printer 19, a camera, a microphone, a speaker, and an input device or keyboard. For example, mobile communication device 18 may communicate with printer 26 using Bluetooth standard circuitry. It is envisioned that in some remote environments, a travel document reader and/or an RFID reader/writer and RFID tags may be available. Where a travel document reader and/or an RFID reader/writer is available, mobile communication device 18 may couple to the travel document reader and/or the RFID reader/writer through USB or other communication circuitry. The display and the input device may be combined as a touch screen.

In any of the examples above involving kiosk 14, computer system 16, and mobile device 18, airline system 12 verifies that a passenger has a valid reservation during check-in via web site 34. The passenger may generate a boarding pass for printing to a local printer and/or download boarding pass to the passenger's mobile communication device 18. Additionally, the passenger may pay any baggage costs and generate a baggage tag for printing to the local printer 22, 24, or 26. Check-in software 36 may provide instructions for printing a baggage tag, for applying the baggage tag to baggage, and for removing and saving a stub or other portion of the baggage. Check-in software 36 may also program RFID tag with a baggage identifier and/or other information, when RFID tags and an RFID tag reader/writer are available, such as at kiosk 14.

Upon arrival at the airport, the passenger proceeds to a baggage drop location. In one example embodiment, a passenger uses baggage drop computer system 20 to drop-off tagged baggage. In another example embodiment, the functions of kiosk 14 and baggage drop computer system 20 may be combined.

Baggage drop computer system 20 includes one or more processors, memory, and program and data storage. Computer system 20 may execute an operating system such as a Microsoft operating system. Computer system 20 may execute other computer software, which may be stored in a computer readable medium, and which include web browser software to display web pages from airline system 12. Computer system 20 further includes network circuitry for connecting to airline system 12 through network 40, and may include other circuitry for connecting to peripherals, such as a display, one or more printers, a travel document reader, and an input device or keyboard.

In some embodiments, the baggage drop computer system 20 includes baggage handling software (not shown) that interacts with a customer at the luggage drop computer system 20 and interfaces to the airline system 12 (for example, the baggage handling software may communicate with the check-in software 36 to retrieve relevant information, such as that described below).

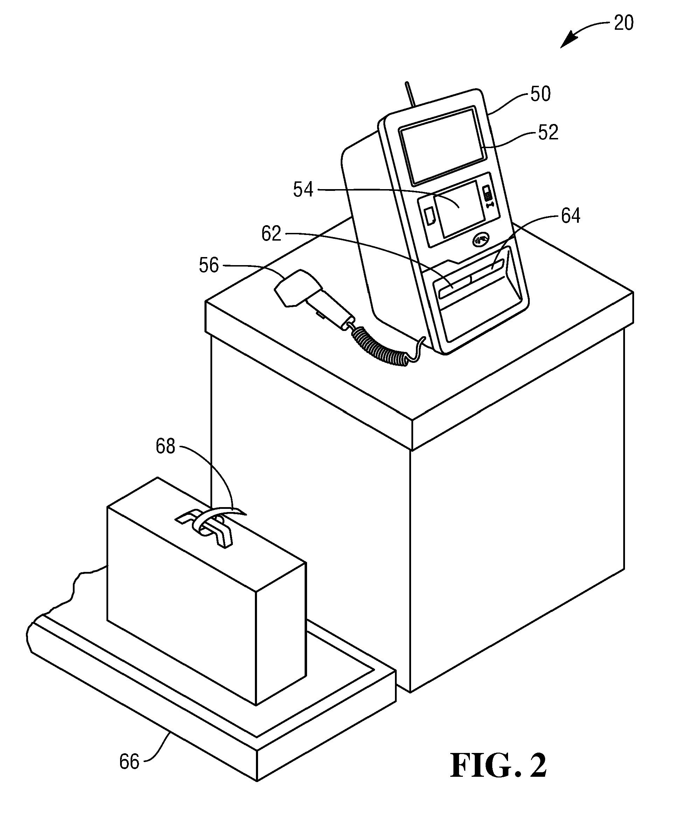

With reference to Fig. 2, an example baggage drop computer system 20 includes a housing 50 containing touch screen 52, baggage tag printer 62, and receipt printer 64. Baggage drop computer system 20 is illustrated in a position on a check-in counter, but other positions and mounting configurations are also envisioned.

Touch screen 52 displays baggage check-in options and helpful information.

Baggage tag printer 62 prints baggage tags for attachment by passengers to their baggage.

Receipt printer 64 prints baggage receipts and/or travel information for passengers.

Example baggage drop computer system 20 further includes barcode readers 54 and 56. Barcode reader 54 reads two-dimensional (2D) barcodes displayed by mobile communication device 18, including a 2D barcode on a travel document, such as a boarding pass. Barcode reader 54 may also read printed barcodes, including a 2D barcode on a printed boarding pass. An example barcode reader 54 may include a charge coupled device (CCD) camera or other image capture device.

Barcode reader 56 reads 2D barcodes on baggage tags 68. For this purpose, barcode reader 56 is a portable, hand-held device.

In an alternative embodiment, barcode reader 56 may also include an RFID reader/writer for programming RFID baggage tags 68.

Baggage drop computer system 20 further includes conveyor 66, which includes a scale for weighing passenger baggage. Conveyor 66 transports baggage to a baggage handling system.

Alternative embodiments may include a passport reader/scanner and a biometric capture device for identifying a passenger. Conveyor 66 may additionally include baggage size constraints and/or baggage size measuring equipment.

The passenger uses barcode reader 54 to scan a barcode from a boarding pass, either from mobile device 18 or from a paper version of the boarding pass. Check-in software 36 connects to airline system 12 to identify the passenger using information in the barcode (the baggage handling software may communicate with the check-in software 36 to provide the scanned barcode information). Check-in software 36 also determines from passenger data 32 that the passenger has previously checked baggage. Check-in software 36 may treat checked baggage as "inactive" until the passenger drops off the baggage at the airport.

Check-in software 36 may prompt the passenger to put the baggage on conveyor 66. Check-in software 36 may then capture baggage weight information and compare it to threshold limits and/or make it available for airplane weight and balance calculations.

Check-in software 36 prompts the passenger to scan and/or read baggage tag 68 using barcode reader 56. Check-in software 36 then determines whether the baggage tag information matches previously stored baggage tag information. If so, check-in software 36 "activates" baggage tag 68 and inducts baggage tag 68 into a baggage handling system at the airport.

It is envisioned that the check-in process may be modified by airlines and/or government authorities, for example, to add restrictions to the check-in process.

As one example, passengers may be required to pre-register at web site 34 before being allowed to self-tag their baggage. Pre-registration status and data may be stored in passenger data 32. Check-in software 36 may not allow a passenger who has not pre-registered to complete a self-tagging process.

As another example, some jurisdictions more stringent verification of passenger identities before baggage can be tagged. In such jurisdictions, the passenger may print baggage tag during online check-in and present passenger identification with the printed baggage tag in person to an attendant upon arrival at an airport. For example, the attendant may be located at a check-in counter or at a baggage drop location. The attendant or the passenger may then tag the baggage.

Alternatively, the passenger may conduct a virtual session with an airport or other designated security agent. The agent may be located at the airport or remotely located from the airport, such at a reservation or call center. One agent may service multiple passengers at multiple locations around the world.

The virtual session may occur at a baggage drop location using baggage drop computer system 20. Baggage drop computer system 20 may include additional peripherals for conducting the virtual session, including a camera, a microphone, and a speaker.

The baggage drop may be located at an airport or an approved off-airport location, such as a hotel, a convention center, or a cruise terminal. Instead of passengers having to worry about storage and transport of their baggage, an approved baggage transporter may take the baggage to the airport from the baggage drop location.

In an example scenario, the agent may use the travel document reader to capture and validate the authenticity of a travel document. The travel document reader may also include features such as templates and infrared imaging to ensure that the travel document has not been tampered with.

In response to displayed and/or aural prompts from the agent, passengers look at the camera and then present identification cards, passports, or other forms of identification to the camera. The virtual agent compares received images of the passengers and their presented forms of identification, and then authorizes the passengers to drop off their baggage after their identities are verified.

Alternatively, the virtual session may occur elsewhere. For example, the virtual session may occur between an agent and a passenger using kiosk 14, computer system 16, or mobile communication device 18.

As another example, self-tagging of baggage may only be authorized on predetermined routes. Flights authorized for self-tagging may be designated in flight data 30. Check-in software 36 may not allow a passenger to complete a self-tagging process if the passenger's flight is not designated by the airline and/or government authorities for self-tagging of baggage.

It is envisioned that remote printers connected to computer system 16 and mobile device 18 may likely be inkjet or laser printers equipped with ordinary stationary, copy paper, or other general purpose paper stock. For example, a baggage tag may be printed on standard letter size paper.

Airlines may require use of a special tag holder to protect baggage tags from tearing due to handling and deterioration due to rain and other weather so that they remain readable. Airlines may authorize that certain tag holders from retailers be used and/or provide baggage tag holders at airports. A passenger may install a baggage tag holder after printing a baggage tag, or acquire and install the baggage tag holder upon arrival at the airport.

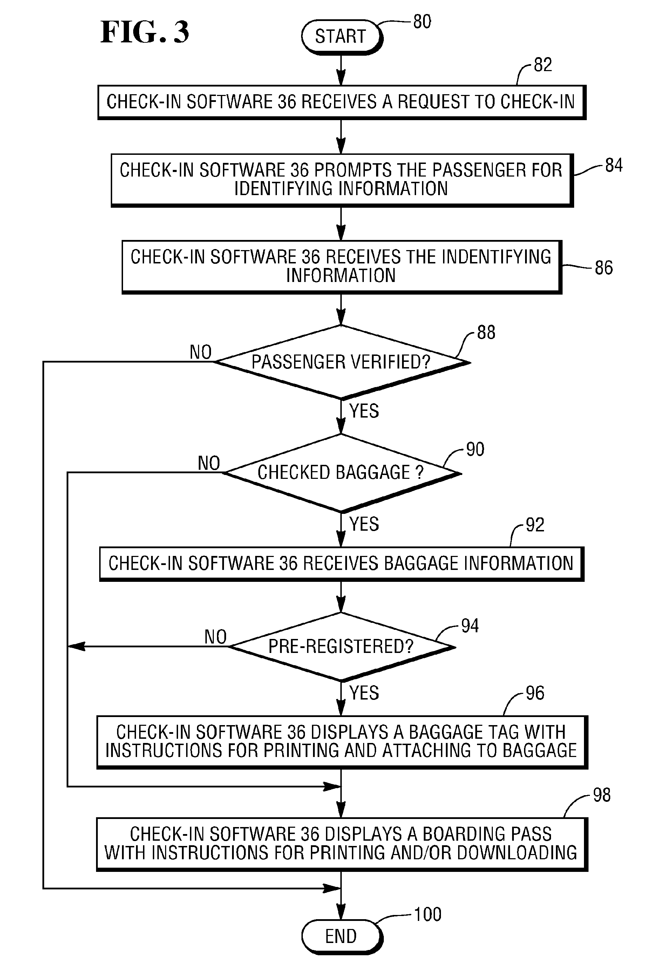

With reference to Fig. 3, an example self check-in method is illustrated beginning with start 80. The example method streamlines the passenger experience by allowing passengers to check their bags and obtain baggage tags online, for example, using kiosk 14, computer system 16, or mobile communication device 18. Passengers may then drop their baggage off at designated baggage drop locations, without having to wait for an attendant to tag their baggage. Other example check-in methods incorporating self-tagging are also envisioned.

In step 82, check-in software 36 receives a request to check-in from a passenger connected to web site 34 through network 40.

In step 84, check-in software 36 prompts the passenger for identifying information. Example identifying information may include a confirmation number, a name, and/or a flight number.

In step 86, check-in software 36 receives identifying information from the passenger.

In step 88, check-in software 36 verifies the identifying information against passenger data 32 and/or flight data 30. If the verification passes, operation proceeds to step 80. Otherwise, operation ends at step 102. Check-in software 36 may display an error message indicating that the passenger and/or the flight cannot be found.

In step 90, check-in software 36 determines whether the passenger has baggage to be checked. If so, operation continues to step 92. Otherwise, operation skips ahead to step 98.

In step 92, check-in software 36 receives baggage information from the passenger, i.e., number of bags to be checked, and processes any payment required.

In step 94, check-in software 36 determines whether the passenger has pre-registered for self-tagging of baggage. If so, operation proceeds to step 96. Otherwise, operation skips to step 98. Check-in software 36 may additionally display a reminder to check baggage upon arrival at the airport.

In step 96, check-in software 36 displays an image of a baggage tag with instructions for printing the image and attaching a printed baggage tag to baggage. The passenger prints the image of the baggage tag and attaches the printed baggage tag to the baggage in accordance with the instructions. Optionally, the instructions may direct the passenger to obtain and use a protective baggage tag holder. The passenger may acquire a baggage tag holder in advance and install the baggage tag holder after printing a baggage tag, or acquire and install the baggage tag holder upon arrival at the airport.

In jurisdictions that require more stringent verification of passenger identities before baggage can be tagged, the passenger may conduct a virtual session with an airport or other designated security agent to complete that verification. The passenger may look into the camera, present identification, and provide any additional information requested by the agent. Alternatively, the passenger may print the baggage tag during online check-in and present passenger identification with the printed baggage tag in person to an attendant upon arrival at an airport.

In step 98, check-in software 36 displays an image of a boarding pass with instructions for printing and/or downloading the image of the boarding pass. The passenger prints and/or downloads the image of the boarding pass in accordance with the instructions.

In step 100 operation ends.

Upon arrival at the airport, the passenger proceeds to the baggage drop location and uses baggage drop computer system 20 to add the baggage to the airport baggage handling system. If required, the passenger may present passenger identification with printed baggage tags to an attendant. The attendant or the passenger may then tag the baggage.

Other example methods may require other or additional requirements before allowing self-tagging. For example, in other example method, self-tagging of baggage may only be authorized on predetermined routes. Check-in software 36 checks flight data 30 to determine whether self-tagging has been authorized for the passenger's flight.

Further, other example methods may include activation or programming of RFID tags with an identifier and/or other information during the self-tagging process.

Advantageously, the check-in method reduces passenger wait time and the amount of attendant time required to check passengers in with baggage.

Although the present invention has been described with particular reference to certain preferred embodiments thereof, variations and modifications of the present invention can be effected within the scope of the following claims.

## Claims

1. A processor-implemented method programmed in a non-transitory processor-readable medium and to execute on one or more processors of a server configured to execute the method, comprising:
interacting, at the server, with a passenger to receive and verify passenger identifying information (steps 86 and 88);
receiving baggage information from the passenger (step 92); and
sending an image of a baggage tag (68) to the passenger for printing and attachment by the passenger to baggage of the passenger (step 96).

2. The method of claim 1, wherein interacting with a passenger comprises:
establishing a virtual session between the passenger and an agent to verify the passenger identifying information.

3. The method of claim 1, wherein interacting comprises: interacting with a passenger through a kiosk (14).

4. The method of claim 1, wherein interacting comprises: interacting with a passenger through a home computer system (16).

5. The method of claim 1, wherein interacting comprises: interacting with a passenger through a mobile communication device (18).

6. The method of any preceding claim, further comprising: determining that the passenger has pre-registered for the printing and the attachment before sending the image of the baggage tag (68) to the passenger (step 94).

7. The method of any preceding claim, further comprising: determining that the printing and the attachment have been authorized for a route of the passenger before sending the image of the baggage tag (68) to the passenger.

8. The method of any preceding claim, further comprising: interacting, at the server, with a passenger through a baggage drop computer system (20) to receive and verify the passenger identifying information before the attachment of the baggage tag (68) to the baggage.

9. A baggage drop computer system (20) comprising:
network circuitry for connecting to an airline system (12) through a network (40),
a display (52),
a baggage tag printer (62),
a travel document reader (54 or 56), and
baggage handling software operable to: (i) instruct a passenger to use the barcode reader (54 or 56) to scan a barcode from a boarding pass; (ii) connect to the airline system (12) to identify the passenger using information in the scanned barcode; (iii) ascertain from the airline system (12) that the passenger has previously checked baggage; (iv) prompt the passenger to put the baggage on the conveyor (66); and (v) capture baggage weight information and compare it to threshold limits and/or make it available for airline weight and balance calculations.

10. A baggage drop computer system (20) according to claim 9, wherein the travel document reader (54 or 56) comprises a portable, two-dimensional barcode reader (54, 56).

11. A baggage drop computer system (20) according to claim 9 or 10, wherein the baggage drop computer system (20) further comprises a conveyor (66) incorporating a scale for weighing passenger baggage, and operable to transport baggage to a baggage handling system.

12. A baggage drop computer system (20) according to claim 11, wherein the conveyor (66) includes baggage size constraints.

13. A baggage drop computer system (20) according to claim 11 or 12, wherein the conveyor (66) includes baggage size measuring equipment.

14. A baggage drop computer system (20) according to any of claims 9 to 13, wherein the baggage drop computer system (20) further comprises a passport reader/scanner and a biometric capture device for identifying a passenger.

15. A baggage drop computer system (20) according to any of claims 9 to 14, wherein the baggage handling software is further operable to: (i) instruct a passenger to use the barcode reader (54 or 56) to scan a baggage tag (68); (ii) ascertain whether the scanned baggage tag information matches previously stored baggage tag information; (iii) activate the baggage tag (68); and (iv) induct the activated baggage tag (68) into a baggage handling system.
